# EUROPEAN PATENT SPECIFICATION

(11) **EP 4 565 730 B1**
(45) Date of publication and mention of the grant of the patent: **01.07.2026**
(21) Application number: 23753993.7
(22) Date of filing: 01.08.2023
(51) Int. Cl.: F27B 3/26, F27B 9/06, F27D 17/00, F27D 99/00, F27D 17/10, C25B 1/042, C25B 9/77

(54) **METHOD FOR HEATING A FURNACE AND AN INSTALLATION**
VERFAHREN ZUR BEHEIZUNG EINES OFENS UND EINER INSTALLATION
PROCÉDÉ DE CHAUFFAGE D'UN FOUR ET D'UNE INSTALLATION

(30) Priority: 02.08.2022 WO PCT/IB2022/057148
(43) Date of publication of application: 11.06.2025
(73) Proprietor: ArcelorMittal, 1160 Luxembourg (LU)
(72) Inventor: LAGO FERNANDEZ, Francisco Javier, 33119 Perlavia Asturias (ES); PRENDES, Pedro, 33203 Gijon Asturias (ES); REYES, Jon, 48012 Bilbao (ES); CUERVO-PINERA, Victor, 33400 Avilès Asturias (ES)
(74) Representative: Lavoix
(86) International application number: PCT/IB2023/057781
(87) International publication number: WO 2024/028762

(56) References cited:
- US-A1- 2019 372 137
- US-A1- 2020 313 217

## Description

The invention relates to a method for heating a furnace comprising radiant tubes, and an installation able to perform the method thereof.

During its manufacturing, a steel strip undergoes thermal treatments to achieve the desired properties. The thermal treatment installations comprise heating means such as Direct Fire Furnace (DFF), Drop Tube Furnace (DTF) and Radiant Tubes Furnace (RTF).

For some thermal treatments, such as annealing, the use of radiant tubes furnace is preferred. Indeed, in such furnace, the strip does not come in direct contact with the combustion products of the flame. Moreover, it allows to control the atmosphere inside the furnace.

Radiant tubes are normally fired using gaseous fuels or oil. However, recent developments led to radiant tubes consuming H₂ and O₂ to generate heat. Unfortunately, the production of H₂ from natural resources requires a lot of energy and lead to greenhouse gas emissions.

Consequently, there is a need to develop a method for heating a furnace comprising radiant tubes having a reduced impact on the environment.

This is achieved by providing a method according to any one of the claims 1 to 7. This is also achieved by providing an installation according to any one of the claims 8 to 12.

Other characteristics and advantages will become apparent from the following description of the invention.

The scope of the present invention is defined by independent claims 1 and 8, and further embodiments of the invention are specified in dependent claims 2-7 and 9-12.

The method for heating a furnace refers to a method for providing heat to the inside of a furnace so as to achieve a temperature allowing thermal treatment of a running steel strip.

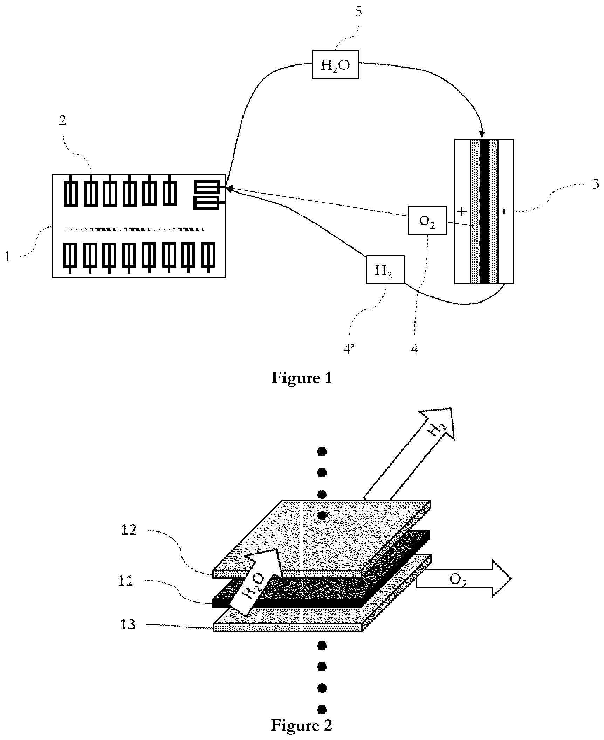

The method is performed in an installation, as illustrated in Figure 1, having a furnace 1 comprising radiant tubes 2, an electrolysing device 3 able to electrolyse steam and to produce H₂ and O₂, such as a Solid Oxide Electrolyser Cells (SOEC), and pipes (not represented in Figure 1). Optionally, the installation can comprise pumping system to ease the flow of the gases.
Figures are provided with reference to the following reference signs:
1: furnace
2: radiant tube
3: electrolysing device
4 and 4': flux of gas from the electrolysing device to the furnace
5: flux of gas from the furnace to the electrolysing device
10: solid oxide electrolyser cell
11: solid ceramic material
12: cathode
13: anode
14: membrane separator

US2020/313217 A1 and US2019/372137 A1 disclose an assembly comprising a SOEC/SOFC-type solid oxide stack, and a clamping system for the stack in a different context.

The radiant tubes are connected, via pipes, to the electrolysing device such that at least two flux of gas (4 and 4') can flow from the electrolysing device to the furnace, e.g. to the radiant tubes, and one flux of gas 5 can flow from the furnace, e.g. the radiant tubes, to the electrolysing device. Moreover, the furnace is preferably connected to means able to supply H₂ and O₂ such as an external supply of H₂ and to an external supply of O₂.

Optionally, storage means can be used between the furnace and the electrolysing device so as to store, at least partly, at least one of the products of the electrolysis.

Preferably the running steel product is a running steel strip or a running steel slab.
The furnace is designed to perform thermal treatment of a steel product such as an annealing of a steel strip or a heating of a steel slab. Preferably, the furnace is an annealing furnace. The radiant tube is part of a radiant tube burner. Preferably, the radiant tube burner is an oxyfuel radiant tube burner.

In the step i., as illustrated in Figure 1, at least a radiant tube is supplied with H₂ and O₂. Those two gases are combined by the radiant tube into heat and steam. The H₂ and O₂ are supplied from a storage and/or from the electrolysing device. The steam is essentially composed of H₂O molecules.

Preferably, in step i, the at least one of said radiant tubes is supplied with H₂ and O₂ in conditions allowing their ignition and thus the combination into heat and steam. The person skilled in the art is able to determine the parameters leading to the ignition of H₂ and O₂.

For example, the furnace can comprise a radiant tube burner supplied with said H₂ and O₂. The radiant tube burner can produce a pilot flame or a spark which permits to ignite said supplied H₂ and O₂ and thus lead to the combination into heat and steam.

O₂ is supplied with a temperature from at least 550°C, preferably with a temperature from at least 600°C and even more preferably from at least 700°C. The H₂ is supplied at a temperature from room temperature, preferably at least of 200°C, more preferably of at least 300°C and even more preferably of 400°C. The alternative has been developed with the intent to produce synergically effect between the three first process steps. Indeed, heating the O₂ and H₂ in step i. permits to increase the temperature of the recovered steam in the step ii. and thus increase the efficiency of the electrolysis of step iii. On the contrary, in the state of the art, development discloses processes wherein the gases are supplied at low temperature, such as in WO2016102825, to increase the energy efficiency of the process.

The furnace can comprise at least an oxyfuel burner, such as an oxyhydrogen burner, having a radiant tube. The oxyhydrogen burner can comprise heat exchanger able to heat the gases between the burner inlet and the burner nozzle.

Preferably, the radiant tube burner can preheat the O₂ and optionally the H₂ that is supplied to the radiant tube burner. So the first step can also comprise the step of preheating the supplied O₂ and optionally the supplied H₂ prior to the combination, e.g. the ignition.

In the step ii., the steam is recovered from the radiant tube so as to be used in a further step.

However, H₂ and/or O₂ can be present in the steam due to incomplete combustion and/or not optimal O₂/H₂ ratio. Also, the steam can comprise residues from past combustion inside the radiant tube. This is especially true if the radiant tube has been operated with oil or natural gas.

In step iii., the steam recovered in step ii., is electrolysed to produce H₂ and O₂. A portion of the produced H₂ and O₂ can be flown to storage means.

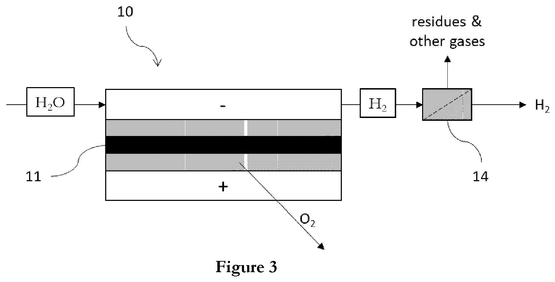

Preferably, said electrolysis is performed by means of at least one solid oxide electrolyser cell. As illustrated in Figures 2 and 3, a solid oxide electrolyser cell uses a solid ceramic material as an electrolyte 11 that selectively conducts negatively charged oxygen ions (O₂⁻) or positively charged hydrogen protons (H⁺) depending on the membrane type, e.g. oxygen-ion conducting membrane or proton-conducting membrane respectively).

The steam at the cathode 12 combines with electrons from the external circuit to form hydrogen gas and negatively charged oxygen ions. The reaction at the cathode is thus : H₂O +2e⁻ - H₂ + O₂⁻. As the steam can comprises other gases and/or residues, the H₂ exiting the electrolysing device can be filtered by means of a membrane separator 14 as illustrated in Figure 3.

Then the charged oxygen ions pass through the solid ceramic membrane 11 and react at the anode 13 to form oxygen gas and generate electrons for the external circuit. The reaction at the anode is thus : 2 O₂⁻ → O₂ + 4e⁻.

This is preferably performed at elevated temperature and permits to generate hydrogen and oxygen from steam.

This electrolysis reaction is endothermic, so it requires an external energy input for it to occur, e.g. heat and/or electricity. Therefore, it is particularly advantageous to do this electrolysis with steam exiting a furnace having a high temperature.

Alternatively, the in step iii., the electrolysis can be performed by means of a water vapour electrolyser using electrodes made of porous metal with an electrolyte from composite ionic materials. This system permits advantageously to in step iii. electrolyse a steam having a temperature greater than 300°C.

The steam electrolysed in step iii. is electrolysed by a water pour electrolyser and has a temperature from 300°C to 1000°C, preferably from 400°C to 1000°C.

In step iv., at least one radiant tube of the installation is supplied with H₂ and O₂ produced in the step iii.

In step ii., the recovered steam is heated to a temperature from 650°C to 1000°C. Even preferably, the recovered steam is heated to a temperature from 700°C to 1000°C. Such a heating of the recovered steam permits to increase the efficiency of a SOEC.

In this case, the installation comprises a heating means able to heat the recovered steam. Preferably, in step ii. said heating of said recovered steam is performed by heating means being powered in part or all by CO₂ neutral electricity.

For example, the heating means can be a heat exchanger 7 connected to the radiant tube and the electrolysing device so as to heat a gas flow from the radiant tube before entering the electrolysing system.

Preferably, the steam electrolysed in step iii. has a temperature from 650°C to 1000°C and even more preferably, from 700°C to 1000°C.

Preferably, in step iii., the electrolysis of steam is powered in part or all by CO₂ neutral electricity.

CO₂ neutral electricity includes notably electricity from renewable source which is defined as energy that is collected from renewable resources, which are naturally replenished on a human timescale, including sources like sunlight, wind, rain, tides, waves, and geothermal heat. In some embodiments, the use of electricity coming from nuclear sources can be used as it is not emitting CO₂ to be produced.

Preferably, in step iv., the said radiant tube is supplied with the H₂ and the O₂ produced in step iii, and with H₂ and/or O₂ from a storage means, such that they get combined into heat and steam.

Preferably, the step ii., iii. and iv. are repeated.

The use of a radiant tube consuming H₂ and O₂ in a quasi-closed loop allows to heat a furnace in a manner requiring less energy and natural resources compared to heating method of the state of the art.

The invention also relates to an installation able to perform the method described hereabove, and comprising:
- a furnace (1) comprising at least one radiant tube (2) and being able to thermally treat a running steel product,
- an electrolysing device (3) able to electrolyse steam and to produce H₂ and O₂ wherein said electrolysing device is connected to said radiant tube 2 such that at least two flux of gas (4 and 4') can flow from the electrolysing device 3 to the radiant tube 2 and one flux of gas 5 can flow from the radiant tube 2 to the electrolysing device and wherein said furnace is configured to supply at least one of said radiant tube 2 with H₂ and O₂ such that said H₂ and O₂ can get combined into heat and steam, and wherein said furnace is configured to recover said steam from said at least one of said radiant tubes.

Preferably, said furnace is configured to supply at least one of said radiant tubes with said H₂ and O₂ produced in step iii. such that they get combined into heat and steam.
Preferably, said furnace is able to treat a running steel strip or a running steel slab.

The furnace can comprise at least an oxyfuel burner, such as an oxyhydrogen burner, having a radiant tube. The oxyhydrogen burner can comprise heat exchanger able to heat the gases between the burner inlet and the burner nozzle. The radiant tube is part of a radiant tube burner. Preferably, the radiant tube burner is an oxyfuel radiant tube burner.

Preferably, said electrolysing device comprises at least one Solid Oxide Electrolyser Cell.

Preferably, said installation comprises heating means able to heat steam, wherein said heating means is connected to said furnace and to said electrolysing device.

Preferably, said installation comprises at least a storage means able to store a gas and being connected to said electrolysing device such that a flow of gas can flow from the electrolysing device to said storage means.

Even more preferably, said at least storage means is connected to said furnace such that a flow of gas can flow from said storage means to said furnace.

## Claims

1. A method for heating a furnace (1) comprising at least one radiant tube (2) and being able to thermally
treat a running steel product comprising the steps of:
i. supplying at least one of said radiant tubes with H₂ and O₂ such that said H₂ and said O₂ get combined into heat and steam, wherein O₂ is supplied with a temperature from at least 550°C, and H2 is supplied at a temperature from room temperature,
ii. recovering said steam from said at least one of said radiant tubes, wherein said recovered steam is heated to a temperature from 650°C to 1000°C.
iii. electrolysing said steam at a temperature greater than 300°C so as to produce H₂ and O₂,
iv. supplying at least one of said radiant tubes with said H₂ and O₂ produced in step iii, such that they get combined into heat and steam.

2. A method according to claim 1, wherein in step i, H2 is supplied at a temperature of at least 200 °C.

3. A method according to claims 1 or 2, wherein in step ii., said recovered steam is heated to a temperature from 700°C to 1000°C.

4. A method according to any one of the claims 1 to 3, wherein in step iii., said electrolysis is performed by means of at least one solid oxide electrolyser cell (10).

5. A method according to any one of the claims 1 to 4, wherein, in step iv., the said radiant tube (2)
is supplied with the H₂ and the O₂ produced in step iii, and with H₂ and/or O₂ from a storage means, such that they get combined into heat and steam.

6. A method according to any one of the claims 1 to 5, wherein in step iii., the electrolysis of steam is powered in part or all by CO₂ neutral electricity.

7. A method according to any one of the claims 1 to 6, wherein in step ii., said heating of said recovered steam is performed by heating means being powered in part or all by CO₂ neutral electricity.

8. An installation able to perform the method according to any one of the claims 1 to 7, and comprising
- a furnace (1) comprising at least one radiant tube (2) and being able to thermally treat a running steel product
- an electrolysing device (3) able to electrolyse steam and to produce H₂ and O₂
wherein said electrolysing device is connected to said radiant tube (2) such that at least two flux of gas (4 and 4') can flow from the electrolysing device (3) to the radiant tube (2) and one flux of gas (5) can flow from the radiant tube (2) to the electrolysing device and wherein said furnace is configured to supply at least one of said radiant tube (2) with H₂ and O₂ such that said H₂ and O₂ can get combined into heat and steam, and wherein said furnace is configured to recover said steam from said at least one of said radiant tubes.

9. An installation according to claim 8, wherein said electrolysing device comprises at least one solid oxide electrolyser cell (10).

10. An installation according to claim 8 or 9, wherein said installation comprises heating means able to heat steam, wherein said heating means is connected to said furnace (1) and to said electrolysing device (3).

11. An installation according to any one of the claims 8 to 10, wherein said installation comprises at least a storage means able to store a gas and being connected to said electrolysing device (3) such that a flow of gas can flow from the electrolysing device (3) to said storage means.

12. An installation according to claim 11, wherein said at least storage means is connected to said furnace (1) such that a flow of gas can flow from said storage means to said furnace (1)

## Patentansprüche

1. Verfahren zum Beheizen eines Ofens (1), der mindestens ein Strahlrohr (2), und der in der Lage ist, ein laufendes Stahlprodukt thermisch zu behandeln, umfassend die folgenden Schritte:
i. Zuführen, zu mindestens einem der Strahlrohre, von H₂ und O₂, sodass H₂ und O₂ zu Wärme und Dampf reagieren, wobei O₂ mit einer Temperatur von mindestens 550 °C und H₂ mit einer Temperatur ab Raumtemperatur zugeführt werden,
ii. Rückgewinnung des Dampfs aus mindestens einem der Strahlrohre, wobei der rückgewonnene Dampf auf eine Temperatur von 650 °C bis 1000 °C erhitzt wird.
iii. Elektrolyse des Dampfs bei einer Temperatur von mehr als 300 °C, um H₂ und O₂ zu erzeugen,
iv. Zuführen, zu mindestens einem der Strahlrohre, des in Schritt iii. erzeugten H₂ und O₂, sodass sie zu Wärme und Dampf kombiniert werden.

2. Verfahren nach Anspruch 1, wobei H₂ in Schritt i. bei einer Temperatur von mindestens 200 °C zugeführt wird.

3. Verfahren nach Anspruch 1 oder 2, wobei der rückgewonnene Dampf in Schritt ii. auf eine Temperatur von 700 °C bis 1000 °C erhitzt wird.

4. Verfahren nach einem der Ansprüche 1 bis 3, wobei in Schritt iii. die Elektrolyse mittels mindestens einer Festoxid-Elektrolysezelle (10) durchgeführt wird.

5. Verfahren nach einem der Ansprüche 1 bis 4, wobei in Schritt iv. dem Strahlrohr (2) das in Schritt iii. erzeugte H₂ und O₂ und H₂ und/oder O₂ aus einer Speichereinrichtung zugeführt wird, so dass sie zu Wärme und Dampf kombiniert werden.

6. Verfahren nach einem der Ansprüche 1 bis 5, wobei die Dampfelektrolyse in Schritt iii. teilweise oder vollständig durch CO₂ neutralen Strom betrieben wird.

7. Verfahren nach einem der Ansprüche 1 bis 6, wobei das Erhitzen des rückgewonnenen Dampfs in Schritt ii. durch Heizeinrichtungen erfolgt, die teilweise oder vollständig durch CO₂ neutralen Strom betrieben werden.

8. Anlage, die in der Lage ist, das Verfahren nach einem der Ansprüche 1 bis 7 durchzuführen, und umfassend
- einen Ofen (1), umfassend mindestens ein Strahlrohr (2) und der in der Lage ist, ein laufendes Stahlprodukt thermisch zu behandeln,
- eine Elektrolysevorrichtung (3), die in der Lage ist, Dampf zu elektrolysieren und H₂ und O₂ zu erzeugen, wobei die Elektrolysevorrichtung mit dem Strahlrohr (2) verbunden ist, sodass mindestens zwei Gasströme (4 und 4') von der Elektrolysevorrichtung (3) zu dem Strahlrohr (2) und ein Gasstrom (5) von dem Strahlrohr (2) zu der Elektrolysevorrichtung strömen können, und wobei der Ofen konfiguriert ist, um mindestens einem der Strahlrohre (2) H₂ und O₂ zuzuführen, sodass das H₂ und O₂ in Wärme und Dampf kombiniert werden können, und wobei der Ofen konfiguriert ist, um den Dampf aus mindestens einem der Strahlrohre zurückzugewinnen.

9. Anlage nach Anspruch 8, wobei die Elektrolysevorrichtung mindestens eine Festoxid-Elektrolysezelle (10) umfasst.

10. Anlage nach Anspruch 8 oder 9, **dadurch gekennzeichnet, dass** die Anlage Heizeinrichtungen umfasst, die in der Lage sind, Dampf zu erhitzen, wobei die Heizeinrichtungen mit dem Ofen (1) und mit der Elektrolysevorrichtung (3) verbunden sind.

11. Anlage nach einem der Ansprüche 8 bis 10, wobei die Anlage mindestens eine Speichereinrichtung umfasst, die in der Lage ist, ein Gas zu speichern, und die mit der Elektrolysevorrichtung (3) verbunden ist, sodass ein Gasstrom von der Elektrolysevorrichtung (3) zu der Speichereinrichtung strömen kann.

12. Anlage nach Anspruch 11, wobei die mindestens eine Speichereinrichtung mit dem Ofen (1) verbunden ist, sodass ein Gasstrom von der Speichereinrichtung zu dem Ofen (1) strömen kann.

## Revendications

1. Procédé de chauffage d'un four (1) comprenant au moins un tube radiant (2) et capable de traiter thermiquement un produit d'acier en cours de fabrication comprenant les étapes de :
i. alimentation d'au moins un desdits tubes radiants en H₂ et O₂ de sorte que ledit H₂ et ledit O₂ sont combinés en chaleur et en vapeur, dans lequel l'O₂ est fourni à une température d'au moins 550 °C et le H2 est fourni à une température à partir de la température ambiante,
ii. récupération de ladite vapeur à partir dudit au moins un desdits tubes radiants, dans lequel ladite vapeur récupérée est chauffée à une température de 650 °C à 1000 °C,
iii. électrolyse de ladite vapeur à une température supérieure à 300 °C afin de produire du H₂ et de l'O₂,
iv. alimentation d'au moins un desdits tubes radiants avec ledit H₂ et ledit O₂ produits à l'étape iii, de sorte qu'ils se combinent en chaleur et en vapeur.

2. Procédé selon la revendication 1 dans lequel, à l'étape i, le H2 est fourni à une température d'au moins 200 °C.

3. Procédé selon les revendications 1 ou 2, dans lequel, à l'étape ii, ladite vapeur récupérée est chauffée à une température de 700 °C à 1000 °C.

4. Procédé selon l'une quelconque des revendications 1 à 3, dans lequel, à l'étape iii., ladite électrolyse est réalisée au moyen d'au moins une cellule d'électrolyseur à oxyde solide (10).

5. Procédé selon l'une quelconque des revendications 1 à 4, dans lequel, à l'étape iv., ledit tube radiant (2)
est alimenté par le H₂ et l'O₂ produits à l'étape iii, et par le H₂ et/ou l'O₂ provenant d'un moyen de stockage, de sorte qu'ils se combinent en chaleur et en vapeur.

6. Procédé selon l'une quelconque des revendications 1 à 5 dans lequel, à l'étape iii., l'électrolyse de la vapeur est alimentée en partie ou en totalité par de l'électricité neutre en CO₂.

7. Procédé selon l'une quelconque des revendications 1 à 6, dans lequel, à l'étape ii., ledit chauffage de ladite vapeur récupérée est effectué par un moyen de chauffage alimenté en partie ou en totalité par de l'électricité neutre en CO₂.

8. Installation capable de mettre en oeuvre le procédé selon l'une quelconque des revendications 1 à 7, et comprenant
- un four (1) comprenant au moins un tube radiant (2) et capable de traiter thermiquement un produit d'acier en cours de fabrication
- un dispositif d'électrolyse (3) capable d'électrolyser la vapeur et de produire du H₂ et de l'O₂,
dans lequel ledit dispositif d'électrolyse est connecté audit tube radiant (2) de sorte qu'au moins deux flux de gaz (4 et 4') peuvent s'écouler du dispositif d'électrolyse (3) vers le tube radiant (2) et qu'un flux de gaz (5) peut s'écouler du tube radiant (2) vers le dispositif d'électrolyse et dans lequel ledit four est configuré pour alimenter au moins l'un desdits tubes radiants (2) en H₂ et O₂ de sorte que lesdits H₂ et O₂ peuvent se combiner en chaleur et en vapeur, et dans lequel ledit four est configuré pour récupérer ladite vapeur à partir dudit au moins un desdits tubes radiants.

9. Installation selon la revendication 8, dans laquelle ledit dispositif d'électrolyse comprend au moins une cellule d'électrolyseur à oxyde solide (10).

10. Installation selon la revendication 8 ou 9, dans laquelle ladite installation comprend un moyen de chauffage capable de chauffer la vapeur, dans lequel ledit moyen de chauffage est connecté audit four (1) et audit dispositif d'électrolyse (3).

11. Installation selon l'une quelconque des revendications 8 à 10, dans laquelle ladite installation comprend au moins un moyen de stockage d'un gaz et étant relié audit dispositif d'électrolyse (3) de sorte qu'un flux de gaz peut s'écouler du dispositif d'électrolyse (3) vers ledit moyen de stockage.

12. Installation selon la revendication 11, dans laquelle ledit au moins un moyen de stockage est relié audit
four (1) de sorte qu'un flux de gaz peut s'écouler dudit moyen de stockage vers ledit four (1).
